# EUROPEAN PATENT APPLICATION

(11) **EP 4 037 076 A1**
(43) Date of publication of application: **03.08.2022**
(21) Application number: 20869998.3
(22) Date of filing: 25.09.2020
(51) Int. Cl.: H01M 50/20, H01G 11/10, H01G 11/18, H01M 50/30

(54) **POWER STORAGE PACK**

(30) Priority: 26.09.2019 JP 2019176099; 26.09.2019 JP 2019176100
(71) Applicant: Panasonic Intellectual Property Management Co., Ltd., Osaka-shi, Osaka 540-6207 (JP)
(72) Inventor: SHIMIZU Keisuke, Osaka-shi, Osaka 540-6207 (JP); ISHIZAKA Katsushi, Osaka-shi, Osaka 540-6207 (JP)
(74) Representative: Vigand, Philippe
(86) International application number: PCT/JP2020/036286
(87) International publication number: WO 2021/060472

(57) **Abstract**

This power storage pack 1 comprises: at least one power storage device 2 having an exhaust part 36 that discharges a gas generated therein; a porous part 4 that has a structure in which a plurality of fire extinguishing particles 38 are aggregated and that has therein pores 40; and a case 6 that accommodates the power storage device 2 and the porous part 4. The fire extinguishing particles 38 are each an aggregate of a plurality of fire extinguishing powders, and the porous part 4 is disposed so that the gas flows through the pores 40.

## Description

### [TECHNICAL FIELD]

The present invention relates to a power storage pack.

### [BACKGROUND ART]

Storage devices such as lithium ion secondary batteries are used as power sources to drive mobile electronic devices such as cell phones and notebook personal computers. Storage devices are used not only in small commercial products but are also used as vehicle-mounted power sources, etc.

Generally, a plurality of storage devices are stored in a case and used in the form of a power storage pack. Further, a storage device generally includes a gas discharging part that discharges a high-temperature, highpressure gas when the gas is produced inside and the internal pressure is increased. The gas discharged from the gas discharging part includes an inflammable gas and fine grains such as fragments of components that form the storage device. When the inflammable gas and high-temperature fine grains are discharged outside the case of the power storage pack, a fire may start in the presence of the inflammable gas, high-temperature fine grains, and oxygen outside the pack. To counter a fire that may start, patent literature 1, for example, discloses a battery module in which a fire extinguisher container that stores the fire extinguishing agent powder is provided in the gas discharging passage inside the case. In this battery module, a fire is inhibited from starting outside the pack because the heat of gas discharged from the battery breaks the fire extinguisher container to eject the fire extinguishing agent powder inside the container into the gas discharging passage, and the fire extinguishing agent powder acts on the discharged gas.

[Patent Literature 1] JP 2019-54973

### [SUMMARY OF INVENTION]

### [TECHNICAL PROBLEM]

According to the related-art structure described above, the fire extinguishing agent powder can be maintained at a predetermined position by storing the fire extinguishing agent powder in the fire extinguisher container. Because the fire extinguishing agent powder is covered by the fire extinguisher container, however, the fire extinguishing work of the fire extinguishing agent powder may be delayed as compared with the case in which the fire extinguishing agent powder is not stored in the fire extinguisher container. Delay in the fire extinguishing work may lead to lower reliability of the power storage pack. This could be addressed by, for example, molding the fire extinguishing agent powder into a sheet and providing the sheet in the case. If a sheet in which the fire extinguishing agent powder is densely packed is provided in the gas discharging passage, however, the sheet of fire extinguishing agent powder blocks the flow of the discharged gas, with the result that a significantly large pressure loss is created as the discharged gas passes through the area where the fire extinguishing agent sheet is provided. An excessively large pressure loss may result in the case of the power storage pack being broken and could lead to lower reliability of the power storage pack.

The present disclosure addresses the above-described issue, and a purpose thereof is to provide technology of increasing the reliability of the power storage pack.

### [SOLUTION TO PROBLEM]

An embodiment of the present disclosure relates to a power storage pack. A power storage pack includes: at least one storage device including an exterior body and a gas discharging part that discharges a gas produced inside the exterior body; a porous member that has a structure in which a plurality of fire extinguishing agent grains are collected and has an air gap inside; and a case that stores the storage device and the porous member. Each fire extinguishing agent grain is a collection of a plurality of fire extinguishing agent powders, and the porous member is provided such that the gas flows in the air gap.

Another embodiment of the present disclosure relates to a power storage pack. A power storage pack includes: at least one storage device including an exterior body and a gas discharging part that discharges a gas produced inside the exterior body; a fire extinguishing agent sheet comprised of a collection of a plurality of fire extinguishing agent powders and having a through hole; and a case that stores the storage device and the fire extinguishing agent sheet. The fire extinguishing agent sheet is provided such that the gas flows in the through hole.

Optional combinations of the aforementioned constituting elements, and implementations of the present disclosure in the form of methods, apparatuses, and systems may also be practiced as additional modes of the present present disclosure.

### [ADVANTAGEOUS EFFECTS OF INVENTION]

According to the present disclosure, the reliability of a power storage pack can be increased.

### [BRIEF DESCRIPTION OF DRAWINGS]

Fig. 1 is a cross-sectional view schematically showing the power storage pack according to embodiment 1;
Fig. 2 is a cross-sectional view of the storage device;
Fig. 3 is a cross-sectional view schematically showing the power storage pack according to embodiment 2;
Fig. 4 is a cross-sectional view schematically showing the power storage pack according to embodiment 3;
Fig. 5 is a cross-sectional view of the storage device;
Fig. 6 is a perspective view of the fire extinguishing agent sheet; and
Fig. 7 is a cross-sectional view schematically showing the power storage pack according to embodiment 4.

### [DESCRIPTION OF EMBODIMENTS]

Hereinafter, the present disclosure will be described based on preferred embodiments with reference to the accompanying drawings. The embodiments are not intended to limit the scope of the present disclosure but exemplify the present disclosure. Not all of the features and the combinations thereof described in the embodiments are necessarily essential to the present disclosure. Identical or like constituting elements, members, processes shown in the drawings are represented by identical symbols and a duplicate description will be omitted as appropriate. The scales and shapes of the parts shown in the figures are defined for convenience's sake to make the explanation easy and shall not be interpreted limitatively unless otherwise specified. Terms like "first", "second", etc. used in the specification and claims do not indicate an order or importance by any means unless specified otherwise and are used to distinguish a certain feature from the others. Those of the members that are not important in describing the embodiment are omitted from the drawings.

### (Embodiment 1)

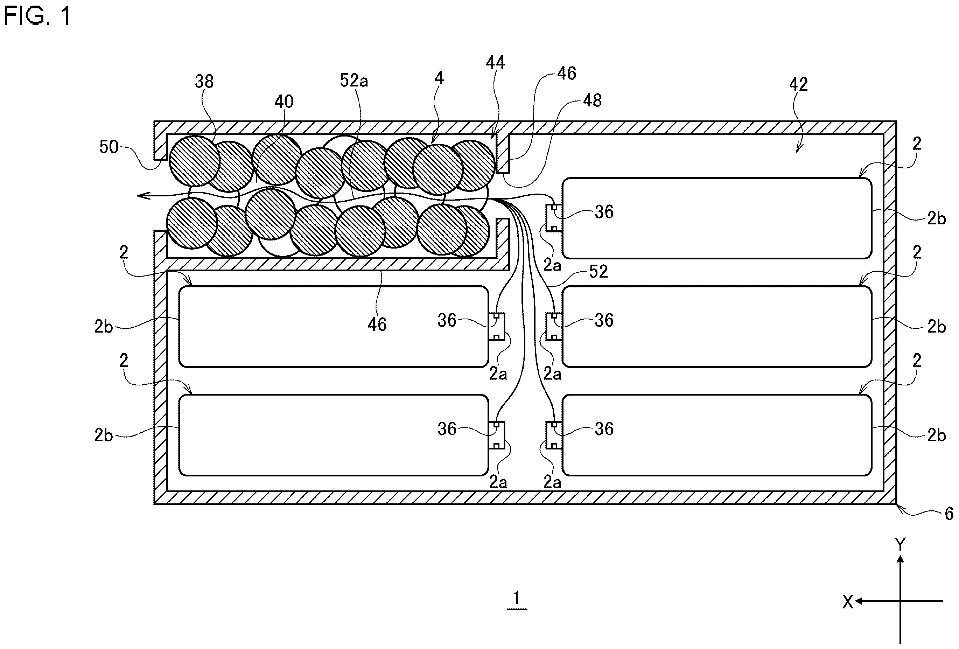

Fig. 1 is a cross-sectional view schematically showing the power storage pack according to embodiment 1. In Fig. 1, illustration of the internal structure of a storage device 2 is omitted. A power storage pack 1 includes a plurality of storage devices 2, a porous member 4, and a case 6.

The storage device 2 is a rechargeable secondary battery exemplified by a lithium ion battery, a nickel hydride battery, a nickel-cadmium battery, etc. or a capacitor like an electric double layer capacitor. The storage device 2 according to this embodiment is a so-called cylindrical battery. The storage device 2 may be a rectangular battery, etc. The power storage pack 1 according to this embodiment includes a plurality of storage devices 2, but the number of storage devices 2 is not limited. The power storage pack 1 may include at least one storage device 2.

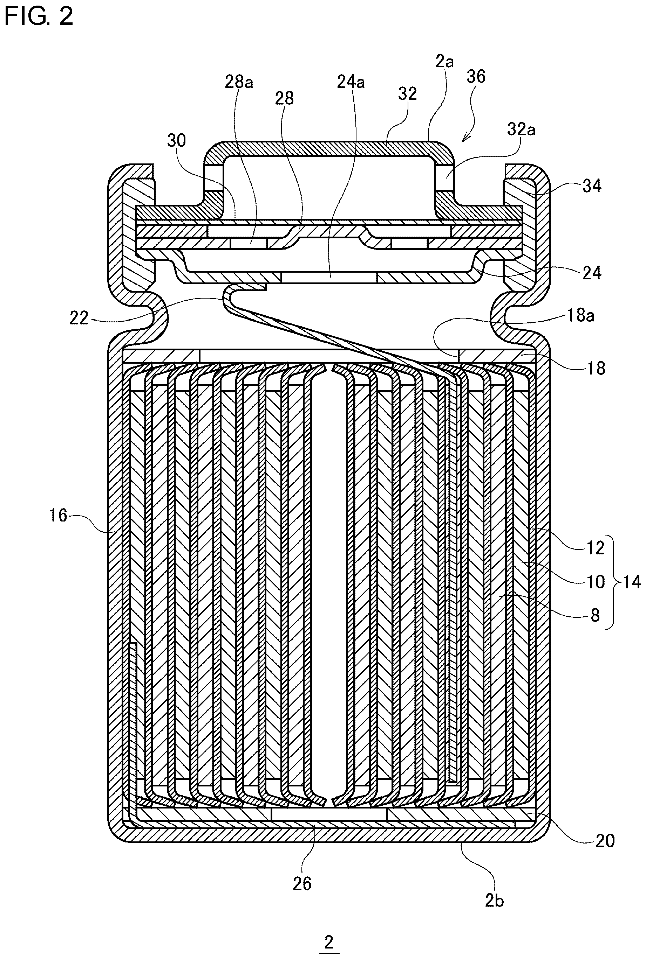

Fig. 2 is a cross-sectional view of the storage device 2. The storage device 2 has a publicly known structure. By way of one example, the storage device 2 has a structure in which an electrode group 14 is stored in a bottomed exterior body 16 along with a non-aqueous electrolyte. The electrode group 14 has a structure in which an anode 8 and a cathode 10 are wound via a separator 12. In the exterior body 16, an insulating plate 18 and an insulating plate 20 are provided to sandwich the electrode group 14. Further, the storage device 2 includes an anode lead 22, a filter 24, a cathode lead 26, an inner cap 28, a valve body 30, a terminal plate 32, and a gasket 34. The filter 24, the inner cap 28, the valve body 30, and the terminal plate 32 form a sealing body that seals the opening of the exterior body 16. The insulating plate 18 is provided toward the sealing body, and the insulating plate 20 is provided toward the bottom of the exterior body 16.

The anode 8 is bonded to the filter 24 via the anode lead 22. The filter 24 is connected to the inner cap 28. The inner cap 28 has a projection and is bonded to the valve body 30 made of a metal via the projection. The valve body 30 is connected to the terminal plate 32. The terminal plate 32 functions as an anode terminal 2a. The cathode 10 is bonded to the bottom of the exterior body 16 via the cathode lead 26. The bottom of the exterior body 16 functions as a cathode terminal 2b. The gasket 34 is interposed between the sealing body and the exterior body 16 to provide insulation therebetween.

The insulating plate 18 has a through hole 18a that provides communication between the space toward the electrode group 14 and the space toward the filter 24. The filter 24 has a through hole 24a that provides communication between the space toward the insulating plate 18 and the space toward the inner cap 28. The inner cap 28 has a through hole 28a that provides communication between the space toward the filter 24 and the space toward the valve body 30. When an abnormality such as internal short-circuit occurs in the storage device 2 and a gas is produced from the electrode group 14 as a result, the gas reaches the valve body 30 via the electrode group 14, the through hole 18a, the through hole 24a, and the through hole 28a. As the production of gas proceeds and the pressure inside the exterior body 16 is increased, the valve body 30 expands toward the terminal plate 32. When the valve body 30 and the inner cap 28 are dissociated from each other due to the expansion, the current pathway is cut off.

Further, when the pressure inside the exterior body 16 is further increased, the valve body 30 is broken. This causes the gas in the exterior body 16 to reach the terminal plate 32 via the through hole 18a, the through hole 24a, the through hole 28a, and fissures in the valve body 30. The terminal plate 32 has a through hole 32a that provides communication between the space toward the valve body 30 and the space outside the exterior body 16. Therefore, the gas reaching the terminal plate 32 is discharged outside the exterior body 16 via the through hole 32a.

Therefore, the through hole 18a of the insulating plate 18, the through hole 24a of the filter 24, the through hole 28a of the inner cap 28, the valve body 30, and the through hole 32a of the terminal plate 32 form a gas discharging part 36 that discharges the gas produced inside the exterior body 16. The structure of the gas discharging part 36 is not limited to the one described above. Further, the gas discharging part 36 may be provided in the exterior body 16.

As shown in Fig. 1, the plurality of storage devices 2 are installed in the case 6 in a predetermined orientation. By way of one example, the orientation of the plurality of storage devices 2 is defined such that the anode terminals 2a and the cathode terminals 2b thereof are aligned in a predetermined first direction X. The storage devices 2 are arranged in a matrix in the first first direction X and a second direction Y. The second direction Y is a direction orthogonal to the first direction X.

Fig. 1 shows how the plurality of storage devices 2 are installed in two columns in the first direction X and in a plurality of rows in the second direction Y. Two storage devices 2 are arranged in the first column, and three storage devices 2 are arranged in the second column. Further, the orientation of each storage device 2 is defined such that the anode terminal 2a faces the center of the case 6 in the first direction X. The anode terminals 2a of two storage devices 2 in the first column and the anode terminals 2a of two storage devices 2 in the second column face each other. In this state, an anode side collecting plate (not shown) is connected to the anode terminals 2a of the storage devices 2, and a cathode side collecting plate (not shown) is connected to the cathode terminals 2b of the storage devices 2. In this way, the storage devices 2 are connected electrically.

The porous member 4 has a structure in which a plurality of fire extinguishing agent grains 38 are collected and stacked. Each fire extinguishing agent grain 38 is a collection of a plurality of fire extinguishing agent powders. The fire extinguishing agent powder is comprised of a publicly known component such as monobasic ammonium phosphate, sodium hydrogen carbonate, potassium hydrogen carbonate, potassium acetate, and tripotassium citrate. The fire extinguishing agent grain 38 can be obtained by, for example, kneading and shaping the fire extinguishing agent powder and a binder. Alternatively, the fire extinguishing agent grain 38 can be obtained by, for example, compression molding of the fire extinguishing agent powder. The fire extinguishing agent grain 38 has a spherical shape such as a true sphere, prolate spheroid, and oblate spheroid, but may have a polygonal shape such as a cuboid. The porous member 4 has an air gap 40 inside. The air gap 40 is a space defined by a collection of a plurality of fire extinguishing agent grains 38.

When the fire extinguishing agent grain 38 is spherical, the maximum diameter is, for example, 1 mm-10 mm. By configuring the maximum diameter of the fire extinguishing agent grain 38 to be 1 mm or larger, the dimension of the air gap 40 can be secured, and the pressure loss created as the discharged gas passes through the air gap 40 is inhibited from becoming excessive. Further, by configuring the maximum diameter of the fire extinguishing agent grain 38 to be 10 mm or smaller, the surface area of the porous member 4 (area of contact between each fire extinguishing agent grain 38 and the discharged gas) can be inhibited from being reduced significantly to delay or diminish the fire extinguishing work. The maximum diameter is a distance between two points on the surface of the fire extinguishing agent grain 38 where the distance between the points is largest.

The case 6 is a container that stores the storage device 2 and the porous member 4. The case 6 according to this embodiment includes a first chamber 42 and a second chamber 44. The first chamber 42 and the second chamber 44 are separated by a wall part 46. The first chamber 42 stores a plurality of storage devices 2 in a manner of installation described above. The second chamber 44 stores the porous member 4. For example, the second chamber 44 is filled with a plurality of fire extinguishing agent grains 38 that are not adhesively attached to each other. The porous member 4 is formed by allowing the shape of the collection of the fire extinguishing agent grains 38 to be maintained by the inner wall surface of the second chamber 44. Therefore, the fire extinguishing agent powder is provided such that it is exposed in the case 6.

The configuration is not limited to the one described above. A plurality of fire extinguishing agent grains 38 may be adhesively attached to each other in advance to form the porous member 4, and the porous member 4 may be stored in the second chamber 44. In this case, the wall part 46 may be omitted. When the wall part 46 is omitted, the porous member 4 may, for example, be adhesively fixed to the wall surface of the case 6.

The porous member 4 is provided in the case 6 such that the gas discharged from the storage device 2 flows in the air gap 40. The case 6 according to this embodiment is configured such that the wall part 46 separating the first chamber 42 and the second chamber 44 includes a through hole 48. The internal space of the first chamber 42 and the internal space of the second chamber 44 communicate with each other via the through hole 48. This allows the gas ejected from the storage device 2 to flow into the second chamber 44 via the through hole 48 and flow in the air gap 40 of the porous member 4.

When the gas comes into contact with the fire extinguishing agent grain 38 forming the porous member 4, the fire extinguishing agent powder forming the fire extinguishing agent grain 38 reacts to the heat of the gas. The reactant produced in this reaction exhibits a negative catalytic action of inhibiting a chain reaction of combustion. As a result, a fire caused by the gas discharged from the storage device 2 can be inhibited from starting.

The case 6 according to this embodiment includes an opening 50. The opening 50 opens at least after the gas is discharged and connects the spaces inside and outside the case 6. For example, the opening 50 is formed by a thin-wall part provided in a part of the outer wall of the case 6 and having a thickness smaller than the other parts. When the internal pressure inside the case 6 is increased due to the discharge of the gas from the storage device 2, the opening 50 opens as the thin-wall part is disrupted. When the spaces inside and outside the case 6 communicate with each other through the opening 50, a gas flow passage 52 leading from the gas discharging part 36 of the storage device 2 to the opening 50 is formed in the case 6.

Further, the first chamber 42 stores a plurality of storage devices 2. Therefore, a plurality of gas flow passages 52 leading from the gas discharging parts 36 of the storage devices 2 to the opening 50 are formed in the case 6. The plurality of gas flow passages 52 extend to the common opening 50. Therefore, the gas flow passages 52 have, at least in a part thereof, a merging part 52a in which they merge. In other words, the gas flow passages 52 are turned into one flow passage at least in a partial section.

In this embodiment, the second chamber 44 is provided in contact with the outer wall of the case 6. Further, the opening 50 is provided to establish communication between the space outside the case 6 and the internal space of the second chamber 44. Therefore, the internal space of the second chamber 44 communicates with the internal space of the first chamber 42 via the through hole 48 and communicates with the space outside the case 6 via the opening 50. Thus, the internal space of the second chamber 44 forms a portion of the gas flow passage 52.

The second chamber 44 stores the porous member 4. Therefore, the porous member 4 is provided in the gas flow passage 52. The air gap 40 is continuous from the end of the porous member 4 toward the opening 50 to the end thereof toward the through hole 48 and so forms a part of the gas flow passage 52. Further, the gas discharged from the gas discharging part 36 of the storage devices 2 reaches the opening 50 via the through hole 48 and the interior of the second chamber 44. Therefore, the internal space of the second chamber 44 forms the merging part 52a of the gas flow passages 52. Thus, the porous member 4 in the second chamber 44 is provided in the merging part 52a.

As described above, the opening 50 is provided to establish communication between the internal space of the second chamber 44 and the space outside the case 6. Further, the porous member 4 extends over the entirety of the second chamber 44. Therefore, the porous member 4 is provided to cover the opening 50.

As described above, the power storage pack 1 according to this embodiment includes at least one storage device 2, the porous member 4, and the case 6. The storage device 2 includes the exterior body 16 and the gas discharging part 36 that discharges the gas produced inside the exterior body 16. The porous member 4 has a structure in which the plurality of fire extinguishing agent grains 38 are collected and has the air gap 40 inside. The case 6 stores the storage device 2 and the porous member 4. Each fire extinguishing agent grain 38 is a collection of a plurality of fire extinguishing agent powders, and the porous member 4 is provided in the case 6 such that the gas discharged from the storage device 2 flows in the air gap 40. This allows the gas discharged from the storage device 2 to come into contact with the fire extinguishing agent powder and inhibit a fire caused by the discharged gas from starting according to the negative catalytic action of the fire extinguishing agent powder.

In a structure in which a sheet of densely packed fire extinguishing agent is provided in the gas discharging passage, the sheet of fire extinguishing agent powder blocks the flow of the discharged gas, creating a large pressure loss in the flow of the discharged gas. The pressure loss may increase the internal pressure of the case excessively and damage the case. In another scenario, the discharged gas may bypass the fire extinguishing agent sheet and be discharged outside the case, with the result that sufficient fire extinguishing performance cannot be obtained.

This is addressed in this embodiment by forming the porous member 4 with the fire extinguishing agent grains 38 comprised of a collection of fire extinguishing agent powders and causing the gas to circulate in the air gap 40 of the porous member 4. In this way, the pressure loss created as the discharged gas is discharged outside the case 6 can be reduced. According to this embodiment, therefore, the damage to the case 6 can be inhibited, and higher fire extinguishing performance can be obtained. Accordingly, the reliability of the power storage pack 1 can be increased.

Another disadvantage of the related-art structure in which the fire extinguisher container is broken to eject the fire extinguishing agent powder is that it takes time to break the container so that a time difference is created since the discharge of the gas until the ejection of the fire extinguishing agent. For this reason, sufficient fire extinguishing performance may not be obtained. Further, the specific surface area of the fire extinguishing agent powder is significantly large. When the fire extinguishing agent powder is ejected, therefore, each fire extinguishing agent powder acts on the discharged gas abruptly. Moreover, a major portion of the fire extinguishing agent powder acts on the gas at once. Meanwhile, the discharge of the gas from the storage device 2 generally lasts for several seconds to several tens of seconds. When the fire extinguishing agent powder is ejected, therefore, the fire extinguishing agent powder may be consumed in the initial phase of gas discharge, and so sufficient fire extinguishing performance may not be obtained. Further, when the fire extinguishing agent powder is ejected, the unreacted fire extinguishing agent powder may be pressured by the discharged gas and scattered, with the result that sufficient fire extinguishing performance may not be obtained.

This is addressed in this embodiment by providing the fire extinguishing agent powder in the case 6 in the form of the fire extinguishing agent grain 38. Therefore, there is no need for a container for storing the fire extinguishing agent powder. It is therefore possible to cause the fire extinguishing agent powder to act on the discharge of gas from the storage device 2 without delay. Further, the reaction with the gas starts with the fire extinguishing agent powder near the surface of the fire extinguishing agent grain 38 so that the speed of consumption of the fire extinguishing agent powder can be delayed. Therefore, the fire extinguishing work by the fire extinguishing agent powder can last for a long period of time. It is also possible to inhibit the fire extinguishing agent powder from being extruded by the discharged gas. According to this embodiment, therefore, higher fire extinguishing performance can be obtained. Therefore, the reliability of the power storage pack 1 can be increased.

Further, the porous member 4 is a collection of a plurality of fire extinguishing agent grains 38. Therefore, the size of the air gap 40 (i.e., the magnitude of pressure loss), the area of contact with the discharged gas (i.e., the quantity of fire extinguishing agent powder acting on the discharged gas), etc. can be adjusted flexibly by adjusting the size and quantity of the fire extinguishing agent grain 38. This makes it possible to flexibly address the quantity of discharged gas and discharge time that could differ depending on the type of storage device 2. It is also possible to make the type of fire extinguishing agent powder toward the center of each fire extinguishing agent grain 38 different from the type toward the surface. This also helps improve the fire extinguishing performance. Further, by forming the gas flow passage using the air gap 40, it is easy for a non-linear gas flow passage to be formed in the porous member 4. This can extend the gas flow passage and cool the gas more successfully before the gas is discharged outside the case 6.

Further, the case 6 according to this embodiment has the opening 50 that opens at least after the gas is discharged and connects the spaces inside and outside the case 6, and the gas flow passage 52 leading from the gas discharging part 36 to the opening 50 is formed in the case 6. Further, the porous member 4 is provided in the gas flow passage 52. This makes it easier for the gas discharged from the storage device 2 to come into contact with the fire extinguishing agent grain 38. Accordingly, higher fire extinguishing performance can be obtained.

Further, the power storage pack 1 includes a plurality of storage devices 2. Therefore, a plurality of gas flow passages 52 leading from the gas discharging parts 36 of the storage devices 2 to the opening 50 are formed in the case 6. Further, the plurality of gas flow passages 52 have the merging part 52a in which they merge. Further, the porous member 4 is provided in the merging part 52a. This increases the number of storage devices 2 for which a fire is extinguished by one porous member 4. Therefore, the number of porous members 4 provided in the case 6 can be reduced. As a result, the size of the power storage pack 1 can be inhibited from growing, or the number of storage devices 2 that can be stored in the case 6 can be increased. Further, the quantity of the fire extinguishing agent powder used can be reduced.

Further, the porous member 4 according to this embodiment is provided to cover the opening 50. This makes it possible to increase the number of storage devices 2 for which a fire is extinguished by one porous member 4 even if the gas flow passages 52 extending from storage devices 2 do not have the merging part 52a. Accordingly, the number of porous members 4 provided in the case 6 can be reduced. Moreover, the flexibility of arrangement of storage devices 2 can be increased.

### (Embodiment 2)

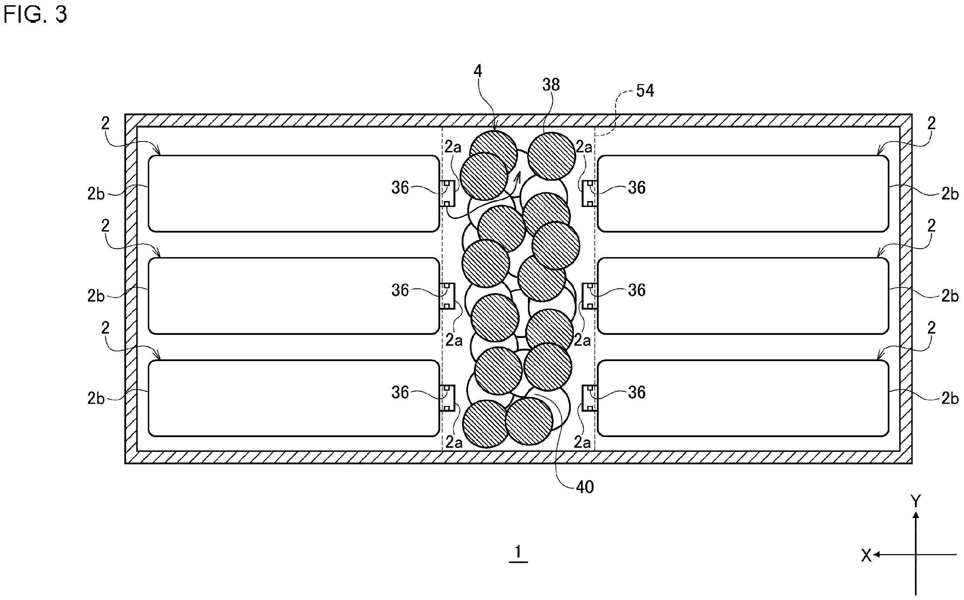

Embodiment 2 has the same configuration as embodiment 1 except for the arrangement of the porous member 4. The following description of this embodiment highlights the difference from embodiment 1, and the description of the common features will be simplified or omitted. Fig. 3 is a cross-sectional view schematically showing the power storage pack 1 according to embodiment 2. In Fig. 3, illustration of the internal structure of the storage device 2 is omitted.

The power storage pack 1 includes a plurality of storage devices 2, the porous member 4, and the case 6. The plurality of storage devices 2 are installed in the case 6 in a predetermined orientation. In this embodiment, the plurality of storage devices 2 are arranged in a matrix of 3 rows by 2 columns in the first direction X and the second direction Y. Further, the storage devices 2 in the first column and the storage devices 2 in the second column are arranged such that their anode terminals 2a face each other. In other words, the orientation of each storage device 2 is defined such that the anode terminal 2a faces the center of the case 6 in the first direction X.

The case 6 has a space at the center in the first direction X that is sandwiched by the group of the storage devices 2 in the first column and the group of the storage devices 2 in the second column. The gas discharging part 36 of each storage device 2 communicates with this space. Therefore, the gas produced inside each storage device 2 is discharged from the gas discharging part 36 to this space. Therefore, the space forms a common gas discharging area 54 to which the gas is discharged from the storage devices 2. The common gas discharging area 54 is an area bounded by the surfaces of the plurality of storage devices 2 toward the anode terminals 2a and the two wall surfaces of the case 6 that face each other in a direction orthogonal to the first direction X and the second direction Y.

The porous member 4 having a structure in which the plurality of fire extinguishing agent grains 38 are collected is provided in the common gas discharging area 54. For example, the plurality fire extinguishing agent grains 38 are adhesively attached to each other in advance to form the porous member 4, and the porous member 4 is provided in the common gas discharging area 54. The porous member 4 is, for example, adhesively attached to the wall surface of the case 6 and is fixed in the common gas discharging area 54. By providing the porous member 4 in the common gas discharging area 54, the gas discharged from each storage device 2 is allowed to flow in the air gap 40 of the porous member 4. Provision of the porous member 4 in the common gas discharging area 54 can be said to be provision of the porous member 4 in the gas flow passage 52 of the gas discharged from each storage device 2. It is not necessary for the entirety of the circumference of the porous member 4 to be in contact, as viewed in the direction of travel of the gas, with the inner wall of the case 6 that bounds the storage space for the porous member 4.

Such a configuration can also achieve the same benefit as that of embodiment 1. As in embodiment 1, there may be only one storage device 2 in this embodiment. In this case, provision of the porous member 4 to face the gas discharging part 36 of the storage device 2 makes it easy for the gas discharged from the storage device 2 to flow in the air gap 40 of the porous member 4.

Embodiments 1 and 2 of the present disclosure have been described above in detail. The embodiments described above are merely specific examples of practicing the present disclosure. The details of the embodiments shall not be construed as limiting the technical scope of the present disclosure. A number of design modifications such as modification, addition, deletion, etc. of constituting elements may be made to the extent that they do not depart from the idea of the invention defined by the claims. New embodiments with design modifications will provide the combined advantages of the embodiment and the variation. Although the details subject to such design modification are emphasized in the embodiments by using phrases such as "of this embodiment" and "in this embodiment", details not referred to as such are also subject to design modification. Any combination of constituting elements included in the respective embodiments is also useful as an embodiment of the present disclosure. Hatching in the cross section in the drawings should not be construed as limiting the material of the hatched object.

The embodiments are non-limiting as to the number and shape of the porous member 4 provided in the case 6 or the opening 50 included in the case 6. The embodiments are also non-limiting as to the outer shape of the storage device 2 or the case 6, the internal structure of the storage device 2, etc.

### (Embodiment 3)

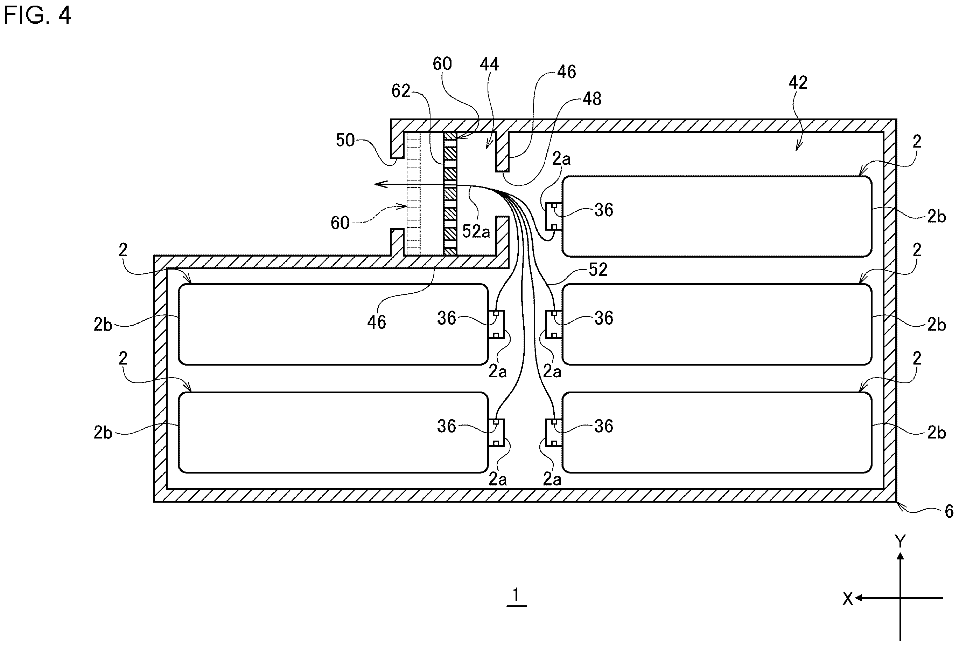

Fig. 4 is a cross-sectional view schematically showing the power storage pack according to embodiment 3. In Fig. 4, illustration of the internal structure of a storage device 2 is omitted. A power storage pack 1 includes a plurality of storage devices 2, a fire extinguishing agent sheet 60, and a case 6.

The storage device 2 is a rechargeable secondary battery exemplified by a lithium ion battery, a nickel hydride battery, a nickel-cadmium battery, etc. or a capacitor like an electric double layer capacitor. The storage device 2 according to this embodiment is a so-called cylindrical battery. The storage device 2 may be a rectangular battery, etc. The power storage pack 1 according to this embodiment includes a plurality of storage devices 2, but the number of storage devices 2 is not limited. The power storage pack 1 may include at least one storage device 2.

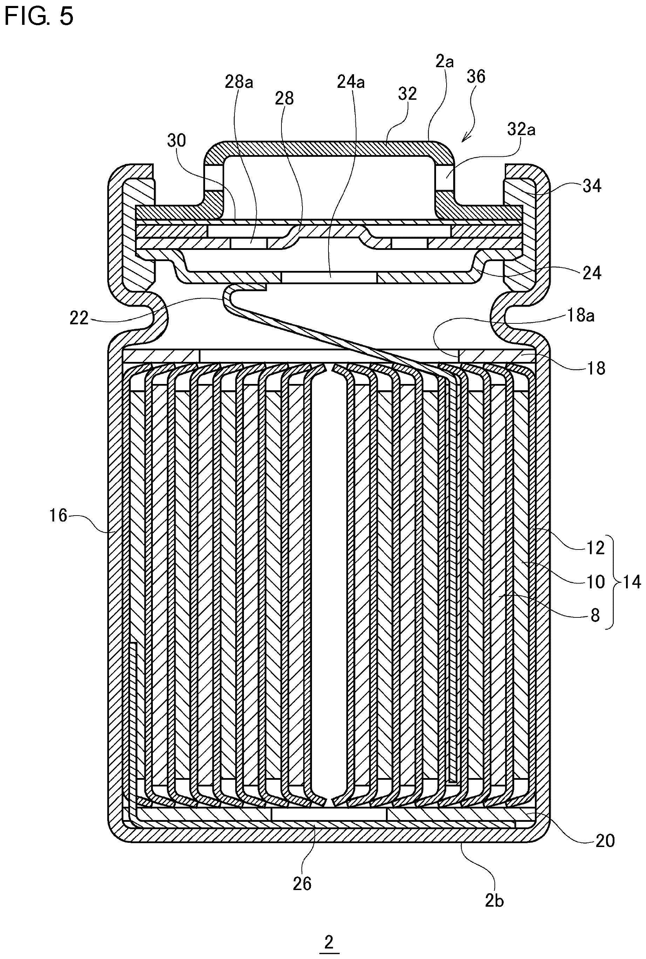

Fig. 5 is a cross-sectional view of the storage device 2. The storage device 2 has a publicly known structure. By way of one example, the storage device 2 has a structure in which an electrode group 14 is stored in a bottomed exterior body 16 along with a non-aqueous electrolyte. The electrode group 14 has a structure in which an anode 8 and a cathode 10 are wound via a separator 12. In the exterior body 16, an insulating plate 18 and an insulating plate 20 are provided to sandwich the electrode group 14. Further, the storage device 2 includes an anode lead 22, a filter 24, a cathode lead 26, an inner cap 28, a valve body 30, a terminal plate 32, and a gasket 34. The filter 24, the inner cap 28, the valve body 30, and the terminal plate 32 form a sealing body that seals the opening of the exterior body 16. The insulating plate 18 is provided toward the sealing body, and the insulating plate 20 is provided toward the bottom of the exterior body 16.

The anode 8 is bonded to the filter 24 via the anode lead 22. The filter 24 is connected to the inner cap 28. The inner cap 28 has a projection and is bonded to the valve body 30 made of a metal via the projection. The valve body 30 is connected to the terminal plate 32. The terminal plate 32 functions as an anode terminal 2a. The cathode 10 is bonded to the bottom of the exterior body 16 via the cathode lead 26. The bottom of the exterior body 16 functions as a cathode terminal 2b. The gasket 34 is interposed between the sealing body and the exterior body 16 to provide insulation therebetween.

The insulating plate 18 has a through hole 18a that provides communication between the space toward the electrode group 14 and the space toward the filter 24. The filter 24 has a through hole 24a that provides communication between the space toward the insulating plate 18 and the space toward the inner cap 28. The inner cap 28 has a through hole 28a that provides communication between the space toward the filter 24 and the space toward the valve body 30. When an abnormality such as internal short-circuit occurs in the storage device 2 and a gas is produced from the electrode group 14 as a result, the gas reaches the valve body 30 via the electrode group 14, the through hole 18a, the through hole 24a, and the through hole 28a. As the production of gas proceeds and the pressure inside the exterior body 16 is increased, the valve body 30 expands toward the terminal plate 32. When the valve body 30 and the inner cap 28 are dissociated from each other due to the expansion, the current pathway is cut off.

Further, when the pressure inside the exterior body 16 is further increased, the valve body 30 is broken. This causes the gas in the exterior body 16 to reach the terminal plate 32 via the through hole 18a, the through hole 24a, the through hole 28a, and fissures in the valve body 30. The terminal plate 32 has a through hole 32a that provides communication between the space toward the valve body 30 and the space outside the exterior body 16. Therefore, the gas reaching the terminal plate 32 is discharged outside the exterior body 16 via the through hole 32a.

Therefore, the through hole 18a of the insulating plate 18, the through hole 24a of the filter 24, the through hole 28a of the inner cap 28, the valve body 30, and the through hole 32a of the terminal plate 32 form an gas discharging part 36 that discharges the gas produced inside the exterior body 16. The structure of the gas discharging part 36 is not limited to the one described above. Further, the gas discharging part 36 may be provided in the exterior body 16.

As shown in Fig. 4, the plurality of storage devices 2 are installed in the case 6 in a predetermined orientation. By way of one example, the orientation of the plurality of storage devices 2 is defined such that the anode terminals 2a and the cathode terminals 2b thereof are aligned in a predetermined first direction X. The storage devices 2 are arranged in a matrix in the first direction X and a second direction Y. The second direction Y is a direction orthogonal to the first direction X.

Fig. 4 shows how the plurality of storage devices 2 are installed in two columns in the first direction X and in a plurality of rows in the second direction Y. Two storage devices 2 are arranged in the first column, and three storage devices are arranged in the second column. Further, the orientation of each storage device 2 is defined such that the anode terminal 2a faces the center of the case 6 in the first direction X. The anode terminals 2a of two storage devices 2 in the first column and the anode terminals 2a of two storage devices 2 in the second column face each other. In this state, an anode side collecting plate (not shown) is connected to the anode terminals 2a of the storage devices 2, and a cathode side collecting plate (not shown) is connected to the cathode terminals 2b of the storage devices 2. In this way, the storage devices 2 are connected electrically.

The fire extinguishing agent sheet 60 is a platelike body comprised of a collection of a plurality of fire extinguishing agent powders. The fire extinguishing agent powder is comprised of a publicly known component such as monobasic ammonium phosphate, sodium hydrogen carbonate, potassium hydrogen carbonate, potassium acetate, tripotassium citrate. The fire extinguishing agent sheet 60 can be obtained by, for example, kneading and shaping the fire extinguishing agent powder and a binder. Alternatively, the fire extinguishing agent sheet 60 can be obtained by, for example, compression molding of the fire extinguishing agent powder.

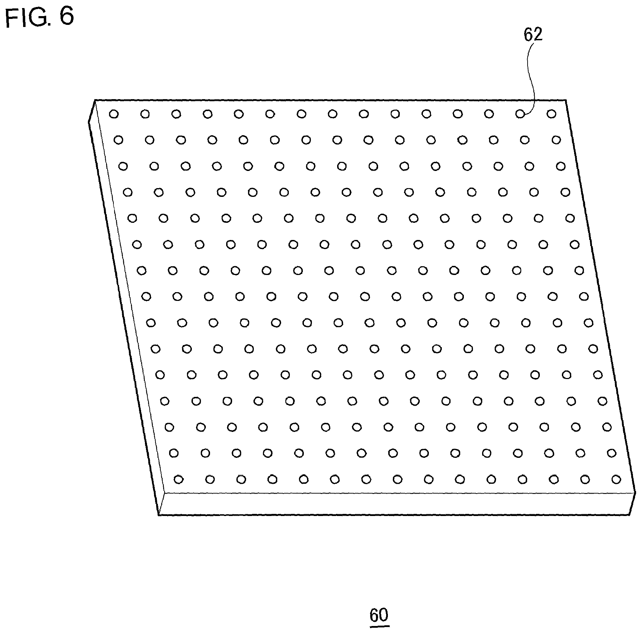

Fig. 6 is a perspective view of the fire extinguishing agent sheet 60. As shown in Figs. 4 and 6, the fire extinguishing agent sheet 60 has through holes 62 that extend through the sheet in the direction of thickness. The fire extinguishing agent sheet 60 according to this embodiment has a square shape and has a plurality of through holes 62 arranged in a matrix. Each through hole 62 is circular as viewed in the normal direction of the fire extinguishing agent sheet 60. The shape of the fire extinguishing agent sheet 60 and the through hole 62 can be modified as appropriate.

The thickness of the fire extinguishing agent sheet 60 is, for example, 0.5 mm-10 mm. By configuring the thickness of the fire extinguishing agent sheet 60 to be 0.5 mm or larger, shortage of the fire extinguishing agent powder can be inhibited. Also, by configuring the thickness of the fire extinguishing agent sheet 60 to be 10 mm or smaller, the fire extinguishing agent powder inside the fire extinguishing agent sheet 60 is inhibited from remaining unreacted and being wasted. The pore diameter of the through hole 62 is, for example, 1 mm-3 mm. By configuring the pore diameter of the through hole 62 to be 1 mm or larger, the pressure loss created as the discharged gas passes through the through hole 62 is inhibited from becoming excessive. Further, by configuring the pore diameter of the through hole 62 to be 3 mm or smaller, the quantity of discharged gas that passes without coming into contact with the fire extinguishing agent powder sufficiently can be reduced. The thickness of the fire extinguishing agent sheet 60 is, for example, an average thickness. The pore diameter of the through hole 62 is a distance between two points on the outer circumference of the through hole 62, as viewed in the normal direction of the fire extinguishing agent sheet 60, where the distance between the points is largest.

The case 6 is a container that stores the storage device 2 and the fire extinguishing agent sheet 60. The case 6 according to this embodiment includes a first chamber 42 and a second chamber 44. The first chamber 42 and the second chamber 44 are separated by a wall part 46. The first chamber 42 stores a plurality of storage devices 2 in a manner of installation described above. The second chamber 44 stores the fire extinguishing agent sheet 60. Therefore, the fire extinguishing agent powder is provided such that it is exposed in the case 6. For example, the circumference of the fire extinguishing agent sheet 60 is, for example, adhesively fixed to the wall surface of the case 6. Alternatively, the fire extinguishing agent sheet 60 may be fixed by providing a groove in the wall surface of the case 6 and inserting the circumference of the fire extinguishing agent sheet 60 in this groove.

The fire extinguishing agent sheet 60 is provided in the case 6 such that the gas discharged from the storage device 2 flows in the through hole 62. The case 6 according to the embodiment is configured such that the wall part 46 separating the first chamber 42 and the second chamber 44 includes a through hole 48. The internal space of the first chamber 42 and the internal space of the second chamber 44 communicate with each other via the through hole 48. This allows the gas ejected from the storage device 2 to flow into the second chamber 44 via the through hole 48 and flow in the through hole 62 of the fire extinguishing agent sheet 60. Even if the fire extinguishing agent sheet 60 is provided to block the flow of the discharged gas, the discharged gas can flow in the through hole 62 so that an increase in the pressure loss resulting from providing the fire extinguishing agent sheet 60 can be inhibited.

When the gas comes into contact with the fire extinguishing agent powder forming the fire extinguishing agent sheet 60, the fire extinguishing agent powder reacts to the heat of the gas. The reactant produced in this reaction exhibits a negative catalytic action of inhibiting a chain reaction of combustion. As a result, a fire caused by the gas discharged from the storage device 2 is inhibited from starting. Further, the fire extinguishing agent sheet 60 is a sheet body having a certain thickness. As compared with the fire extinguishing agent of powder shape, therefore, the surface area of the fire extinguishing agent sheet 60, including the inner surface of the through hole 62 and the principal surface of the fire extinguishing agent sheet 60, can be adjusted easily.

The case 6 according to this embodiment includes an opening 50. The opening 50 opens at least after the gas is discharged and connects the spaces inside and outside the case 6. For example, the opening 50 is formed by a thin-wall part provided in a part of the outer wall of the case 6 and having a thickness smaller than the other parts. When the internal pressure inside the case 6 is increased due to the discharge of the gas from the storage device 2, the opening 50 opens as the thin-wall part is disrupted. When the spaces inside and outside the case 6 communicate with each other through the opening 50, a gas flow passage 52 leading from the gas discharging part 36 of the storage device 2 to the opening 50 is formed in the case 6.

Further, the first chamber 42 stores a plurality of storage devices 2. Therefore, a plurality of gas flow passages 52 leading from the gas discharging parts 36 of the storage devices 2 to the opening 50 are formed in the case 6. The plurality of gas flow passages 52 extend to the common opening 50. Therefore, the gas flow passages 52 have, at least in a part thereof, a merging part 52a in which they merge. In other words, the gas flow passages 52 are turned into one flow passage at least in a partial section.

In this embodiment, the second chamber 44 is provided in contact with the outer wall of the case 6. Further, the opening 50 is provided to establish communication between the space outside the case 6 and the internal space of the second chamber 44. Therefore, the internal space of the second chamber 44 communicates with the internal space of the first chamber 42 via the through hole 48 and communicates with the space outside the case 6 via the opening 50. This causes the internal space of the second chamber 44 to form a portion of the gas flow passage 52.

The second chamber 44 stores the fire extinguishing agent sheet 60. Therefore, the fire extinguishing agent sheet 60 is provided in the gas flow passage 52. In the second chamber 44, the fire extinguishing agent sheet 60 is provided to block communication between the upstream side (i.e., the side toward the gas discharging part 36) of the gas flow passage 52 and the downstream side (i.e., the side toward the opening 50) of the gas flow passage 52. Stated otherwise, the fire extinguishing agent sheet 60 is provided such that one principal surface thereof faces the upstream side of the gas flow passage 52, the other principal surface thereof faces the downstream side of gas flow passage 52, and the entirety of the circumference thereof is fixed to the case 6 or the wall part 46. The through hole 62 extends from one principal surface of the fire extinguishing agent sheet 60 to the other principal surface. Therefore, the discharged gas can flow from the gas discharging part 36 to the opening 50 via the through hole 62. Thus, the through hole 62 forms a portion of the gas flow passage 52.

Further, the gas discharged from the gas discharging part 36 of the storage devices 2 reaches the opening 50 via the through hole 48 and the interior of the second chamber 44. Therefore, the internal space of the second chamber 44 forms the merging part 52a of the gas flow passage 52. Thus, the fire extinguishing agent sheet 60 in the second chamber 44 is provided in the merging part 52a.

As indicated by the broken line in Fig. 4, the fire extinguishing agent sheet 60 may be provided to cover the opening 50. In this case, the wall part 46 may be omitted. When the wall part 46 is omitted, the fire extinguishing agent sheet 60 may, for example, be adhesively fixed to the circumference of the opening 50.

A plurality of fire extinguishing agent sheets 60 may be provided in a plurality of locations in the case 6. Further, a plurality of fire extinguishing agent sheets 60 may be arranged at predetermined intervals. In this case, adjacent fire extinguishing agent sheets 60 may have through holes 62 at mutually different positions. The arrangement of the through holes 62 as described causes the gas to meander as it passes through each fire extinguishing agent sheet 60. This can extend the flow passage of gas and cool the gas more successfully before it is discharged outside the case 6. Further, it is not necessary for the entirety of the circumference of the fire extinguishing agent sheet 60 to be in contact with the inner wall of the second chamber 44 as viewed in the direction of travel (in a direction perpendicular to the principal surface of the fire extinguishing agent sheet 60) of the gas flowing in the vicinity of the fire extinguishing agent sheet 60.

As described above, the power storage pack 1 according to the embodiment includes at least one storage device 2, the fire extinguishing agent sheet 60, and the case 6. The storage device 2 includes the exterior body 16 and the gas discharging part 36 that discharges the gas produced inside the exterior body 16. The fire extinguishing agent sheet 60 is comprised of a collection of a plurality of fire extinguishing agent powders and has the through hole 62. The case 6 stores the storage device 2 and the fire extinguishing agent sheet 60. The fire extinguishing agent sheet 60 is provided such that the gas discharged from the storage device 2 flows in the through hole 62. This allows the gas discharged from the storage device 2 to come into contact with the fire extinguishing agent powder and inhibits a fire caused by the discharged gas from starting according to the negative catalytic action of the fire extinguishing agent powder.

A disadvantage of the related-art structure in which the fire extinguisher container is broken to eject the fire extinguishing agent powder is that it takes time to break the container so that a time difference is created since the discharge of the gas until the ejection of the fire extinguishing agent. For this reason, the fire extinguishing work of the fire extinguishing agent powder may be delayed, and sufficient fire extinguishing performance may not be obtained. Further, the specific surface area of the fire extinguishing agent powder is significantly large. When the fire extinguishing agent powder is ejected, therefore, each fire extinguishing agent powder acts on the discharged gas abruptly. Further, a major portion of the fire extinguishing agent powder acts on the gas at once. Meanwhile, the discharge of the gas from the storage device 2 generally lasts for several seconds to several tens of seconds. When the fire extinguishing agent powder is ejected, therefore, the fire extinguishing agent powder may be consumed in the initial phase of gas discharge so that sufficient fire extinguishing performance may not be obtained. Further, when the fire extinguishing agent powder is ejected, the unreacted fire extinguishing agent powder may be pressured by the discharged gas and scattered, with the result that sufficient fire extinguishing performance may not be obtained.

This is addressed in this embodiment by providing the fire extinguishing agent powder in the case 6 in the form of the fire extinguishing agent sheet 60. Therefore, there is no need for a container for storing the fire extinguishing agent powder. It is therefore possible to cause the fire extinguishing agent powder to act on the discharge of gas from the storage device 2 without delay. Further, the reaction with the gas starts with the fire extinguishing agent powder near the surface of the fire extinguishing agent sheet 60 so that the speed of consumption of the fire extinguishing agent powder can be delayed. Therefore, the fire extinguishing work by the fire extinguishing agent powder can last for a long period of time. It is also possible to inhibit the fire extinguishing agent powder from being extruded by the discharged gas. According to this embodiment, therefore, higher fire extinguishing performance can be obtained. Therefore, the reliability of the power storage pack 1 can be increased.

When a sheet of densely packed fire extinguishing agent not having the through hole 62 is provided in the gas discharging passage, the fire extinguishing agent sheet blocks the flow of the discharged gas, creating a large pressure loss in the flow of the discharged gas. In this case, the pressure loss may increase the internal pressure of the case excessively and damage the case. In another scenario, the discharged gas may bypass the fire extinguishing agent sheet not having the through hole and be discharged outside the case, with the result that sufficient fire extinguishing performance cannot be obtained.

This is addressed in this embodiment by forming the fire extinguishing agent sheet 60 with the fire extinguishing agent powder and causing the gas to circulate in the through hole 62 of the fire extinguishing agent sheet 60. In this way, the pressure loss created as the discharged gas is discharged outside the case 6 can be reduced. According to the embodiment, therefore, the damage to the case 6 can be inhibited, and higher fire extinguishing performance can be obtained. Accordingly, the reliability of the power storage pack 1 can be increased.

Further, the magnitude of pressure loss created when the discharged gas passes through the fire extinguishing agent sheet 60, the area of contact with the discharged gas (i.e., the quantity of fire extinguishing agent powder acting on the discharged gas), etc. can be adjusted flexibly by adjusting the thickness of the fire extinguishing agent sheet 60, and the pore size, number, and arrangement of the through holes 62. This makes it possible to flexibly address the quantity of discharged gas and discharge time that could differ depending on the type of storage device 2. It is also possible to make the type of fire extinguishing agent powder toward the interior of the fire extinguishing agent sheet 60 different from the type toward the surface. This also helps improve the fire extinguishing performance.

Further, the case 6 according to this embodiment has the opening 50 that opens at least after the gas is discharged and connects the spaces inside and outside the case 6, and the gas flow passage 52 leading from the gas discharging part 36 to the opening 50 is formed in the case 6. Further, the fire extinguishing agent sheet 60 is provided in the gas flow passage 52. This makes it easier for the gas discharged from the storage device 2 to come into contact with the fire extinguishing agent sheet 60. Accordingly, higher fire extinguishing performance can be obtained.

Further, the power storage pack 1 includes a plurality of storage devices 2. Therefore, a plurality of gas flow passages 52 leading from the gas discharging parts 36 of the storage devices 2 to the opening 50 are formed in the case 6. Further, the plurality of gas flow passages 52 have the merging part 52a in which they merge. Further, the fire extinguishing agent sheet 60 is provided in the merging part 52a. This increases the number of storage devices 2 for which a fire is extinguished by one fire extinguishing agent sheet 60. Therefore, the number of fire extinguishing agent sheets 60 provided in the case 6 can be reduced. As a result, the size of the power storage pack 1 is inhibited from growing, or the number of storage devices 2 that can be stored in the case 6 can be increased. Further, the quantity of the fire extinguishing agent powder used can be reduced.

When the fire extinguishing agent sheet 60 is provided to cover the opening 50, the number of storage devices 2 for which a fire is extinguished by one fire extinguishing agent sheet 60 can be increased even if the gas flow passages 52 extending from the storage devices 2 do not have the merging part 52a. Accordingly, the number of fire extinguishing agent sheets 60 provided in the case 6 can be reduced. Moreover, the flexibility of arrangement of storage devices 2 can be increased.

### (Embodiment 4)

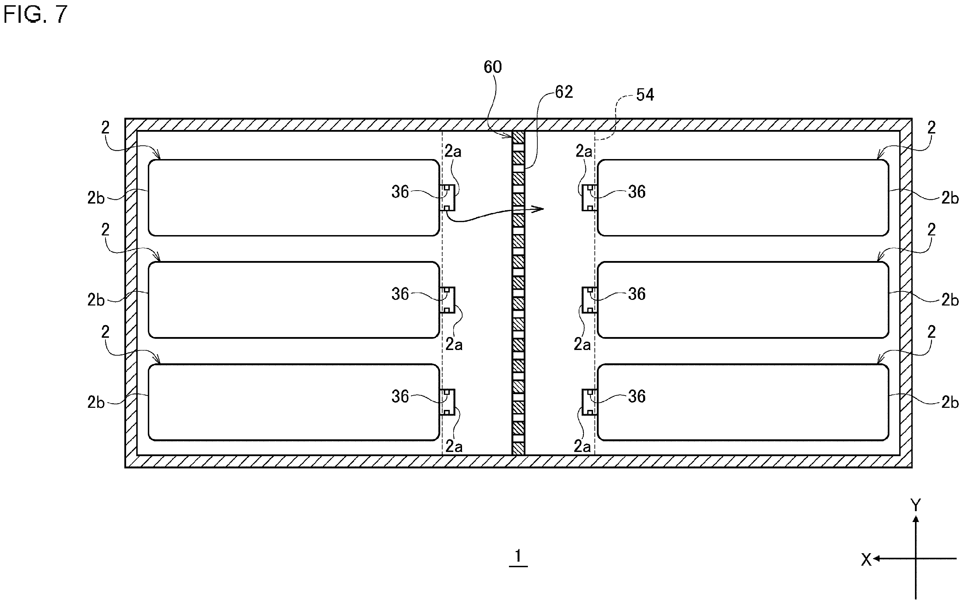

Embodiment 4 has the same configuration as embodiment 3 except for the arrangement of the fire extinguishing agent sheet 60. The following description of this embodiment highlights the difference from embodiment 3, and the description of the common features will be simplified or omitted. Fig. 7 is a cross-sectional view schematically showing the power storage pack 1 according to embodiment 4. In Fig. 7, illustration of the internal structure of the storage device 2 is omitted.

The power storage pack 1 includes a plurality of storage devices 2, the fire extinguishing agent sheet 60, and the case 6. The plurality of storage devices 2 are installed in the case 6 in a predetermined orientation. In this embodiment, the plurality of storage devices 2 are arranged in a matrix of 3 rows by 2 columns in the first first direction X and the second direction Y. Further, the storage devices 2 in the first column and the storage devices 2 in the second column are arranged such that their anode terminals 2a face each other. In other words, the orientation of each storage device 2 is defined such that the anode terminal 2a faces the center of the case 6 in the first direction X.

The case 6 has a space at the center in the first direction X that is sandwiched by the group of the storage devices 2 in the first column and the group of the storage devices 2 in the second column. The gas discharging part 36 of each storage device 2 communicates with this space. Therefore, the gas produced in each storage device 2 is discharged from the gas discharging part 36 to this space. Therefore, the space forms a common gas discharging area 54 to which the gas is discharged from the storage devices 2. The common gas discharging area 54 is an area bounded by the surfaces of the plurality of storage devices 2 toward the anode terminals 2a and the two wall surfaces of the case 6 that face each other in a direction orthogonal to the first direction X and the second direction Y.

The fire extinguishing agent sheet 60 comprised a collection of a plurality of fire extinguishing agent powders is provided in the common gas discharging area 54. For example, the fire extinguishing agent sheet 60 is provided such that one principal surface faces the group of the storage devices 2 in the first column and the other principal surface faces the group of the storage devices 2 in the second column. The fire extinguishing agent sheet 60 is, for example, adhesively attached to the wall surface of the case 6 and is fixed in the common gas discharging area 54. By providing the fire extinguishing agent sheet 60 in the common gas discharging area 54, the gas discharged from each storage device 2 is allowed to flow in the through hole 62 of the fire extinguishing agent sheet 60. Provision of the fire extinguishing agent sheet 60 in the common gas discharging area 54 can be said to be provision of the fire extinguishing agent sheet 60 in the gas flow passage 52 of the gas discharged from each storage device 2.

Such a configuration can also achieve the same benefit as that of embodiment 3. As in embodiment 3, there may be only one storage device 2 in this embodiment. In this case, provision of the fire extinguishing agent sheet 60 to face the gas discharging part 36 of the storage device 2 makes it easy for the gas discharged from the storage device 2 to flow in the through hole 62 of the fire extinguishing agent sheet 60.

Embodiments 3 and 4 of the present disclosure are described above in detail. The embodiments described above are merely specific examples of practicing the present disclosure. The details of the embodiments shall not be construed as limiting the technical scope of the present disclosure. A number of design modifications such as modification, addition, deletion, etc. of constituting elements may be made to the extent that they do not depart from the idea of the invention defined by the claims. New embodiments with design modifications will provide the combined advantages of the embodiment and the variation. Although the details subject to such design modification are emphasized in the embodiments by using phrases such as "of this embodiment" and "in this embodiment", details not referred to as such are also subject to design modification. Any combination of constituting elements included in the respective embodiments is also useful as an embodiment of the present disclosure. Hatching in the cross section in the drawings should not be construed as limiting the material of the hatched object.

The embodiments are non-limiting as to the number and shape of the fire extinguishing agent sheet 60 provided in the case 6 or the opening 50 included in the case 6. The embodiments are also non-limiting as to the outer shape of the storage device 2 or the case 6, the internal structure of the storage device 2, etc.

### [INDUSTRIAL APPLICABILITY]

The present disclosure can be used in power storage packs.

### [REFERENCE SIGNS LIST]

1 power storage pack, 2 storage device, 4 porous member, 6 case, 16 exterior body, 36 gas discharging part, 38 fire extinguishing agent grain, 40 air gap, 50 opening, 52 gas flow passage, 52a merging part, 54 common gas discharging area, 60 fire extinguishing agent sheet, 62 through hole

## Claims

1. A power storage pack comprising:
at least one storage device including an exterior body and a gas discharging part that discharges a gas produced inside the exterior body;
a porous member that has a structure in which a plurality of fire extinguishing agent grains are collected and has an air gap inside; and
a case that stores the storage device and the porous member, wherein
each fire extinguishing agent grain is a collection of a plurality of fire extinguishing agent powders, and
the porous member is provided such that the gas flows in the air gap.

2. The power storage pack according to claim 1, wherein
the case has an opening that opens at least after the gas is discharged and connects spaces inside and outside the case, and a gas flow passage leading from the gas discharging part to the opening is formed in the case, and
the porous member is provided in the gas flow passage.

3. The power storage pack according to claim 2, wherein
the power storage pack includes a plurality of storage devices,
a plurality of gas flow passages leading from the gas discharging parts of the storage devices to the opening are formed in the case,
the plurality of gas flow passages have a merging part in which they merge, and
the porous member is provided in the merging part.

4. The power storage pack according to claim 2 or 3, wherein
the porous member is provided to cover the opening.

5. The power storage pack according to any one of claims 1 through 4, wherein
the power storage pack includes a plurality of storage devices,
the case has a common gas discharging area that the gas discharging part of each storage device communicates with, and
the porous member is provided in the common gas discharging area.

6. A power storage pack comprising:
at least one storage device including an exterior body and a gas discharging part that discharges a gas produced inside the exterior body;
a fire extinguishing agent sheet comprised of a collection of a plurality of fire extinguishing agent powders and having a through hole; and
a case that stores the storage device and the fire extinguishing agent sheet, wherein
the fire extinguishing agent sheet is provided such that the gas flows in the through hole.

7. The power storage pack according to claim 6, wherein
the case has an opening that opens at least after the gas is discharged and connects spaces inside and outside the case, and a gas flow passage leading from the gas discharging part to the opening is formed in the case, and
the fire extinguishing agent sheet is provided in the gas flow passage.

8. The power storage pack according to claim 7, wherein
the power storage pack includes a plurality of storage devices,
a plurality of gas flow passages leading from the gas discharging parts of the storage devices to the opening are formed in the case,
the plurality of gas flow passages have a merging part in which they merge, and
the fire extinguishing agent sheet is provided in the merging part.

9. The power storage pack according to claim 7 or 8, wherein
the fire extinguishing agent sheet is provided to cover the opening.

10. The power storage pack according to any one of claims 6 through 9, wherein
the power storage pack includes a plurality of storage devices,
the case has a common gas discharging area that the gas discharging part of each storage device communicates with, and
the fire extinguishing agent sheet is provided in the common gas discharging area.
